# FASCICULE DE BREVET EUROPEEN

(11) **EP 0 478 469 B1**
(45) Date de publication et mention de la délivrance du brevet: **05.04.1995**
(21) Numéro de dépôt: 91420321.1
(22) Date de dépôt: 12.09.1991
(51) Int. Cl.: H01R 9/22, H02G 3/16

(54) **Bornier de raccordement pour la distribution du neutre et de la terre dans un coffret électrique**
Nulleiter- und Erdanschlussklemmen in einem elektrischen Verteilerkasten
Terminals for the distribution of neutral and ground in an electrical distribution box

(30) Priorité: 28.09.1990 FR 9012265
(43) Date de publication de la demande: 01.04.1992
(73) Titulaire: SCHNEIDER ELECTRIC SA, 92100 Boulogne Billancourt (FR)
(72) Inventeur: Pellicano, Joseph, F-38050 Grenoble Cédex (FR); Potonniée, Jean-Christophe, F-38050 Grenoble Cédex (FR); Bonnet, Jean-Marc, F-38050 Grenoble Cédex (FR)
(74) Mandataire: Hecké, Gérard

(56) Documents cités:
- EP-A- 0 325 371
- DE-U- 1 947 177
- DE-U- 1 948 376
- BBC-NACHRICHTEN, vol. 56, no. 3, 1974, Mannheim (DE), pages 69, 70, Friedrich Leger:"Platz- und montagezeitsparendes Zubehör für den Verteilungsbau"

## Description

L'invention est relative à un bornier utilisable dans un coffret électrique pour la distribution du neutre et de la terre, comprenant au moins deux barrettes conductrices de raccordement, ayant des structures identiques et agencées sur un support isolant, chaque barrette comportant une série de trous échelonnés le long de la direction longitudinale en débouchant des faces latérales opposées pour recevoir les extrémités des conducteurs à raccorder, à chaque trou étant associée une vis de serrage, logée dans un orifice circulaire taraudé accessible depuis la face supérieure pour assurer une bonne connexion desdits conducteurs, l'entraxe entre les orifices successifs correspondant au pas des trous.

Pour la distribution du neutre et de la terre dans un coffret, l'installateur peut utiliser soit des borniers individuels de neutre et de terre, disposés en des endroits prédéterminés du châssis, soit un bornier unique ayant deux barrettes de raccordement agencées sur le même support isolant. Dans ce dernier cas, les barrettes sont généralement alignées selon la direction longitudinale, ce qui nécessite une augmentation de l'encombrement en largeur du coffret.

L'objet de l'invention consiste à réaliser un bornier mixte terre/neutre compact, facilitant le câblage des conducteurs à raccorder.

Le bornier selon l'invention est caractérisé en ce que le support isolant est doté de deux piliers d'extrémités entre lesquels s'étendent parallèlement les barrettes avec formation d'un premier décalage transversal, chaque pilier comportant une paire de bras de positionnement ayant chacun un rebord horizontal conformé en glissière autorisant le coulissement de l'extrémité de la barrette jusqu'à une butée de limitation, et que l'un des bras de chaque pilier se trouve en retrait de l'autre bras pour engendrer un deuxième décalage longitudinal d correspondant à un demi-pas entre les vis des deux barrettes.

La présence du deuxième décalage longitudinal entre les barrettes permet de conserver le libre accès aux vis de la barrette postérieure lorsque le bornier est installé sur le châssis.

Chaque glissière peut être équipée d'un crochet de retenue, en forme de languette élastique susceptible de s'effacer par déformation vers une position inactive lors de l'introduction de l'extrémité de la barrette correspondante dans la glissière, et de revenir vers une position active de verrouillage lorsque ladite extrémité vient en engagement contre la butée.

Le blocage de chaque barrette peut intervenir après introduction du crochet de retenue dans une cavité prévue dans la face inférieure.

Divers types de barrettes peuvent être utilisées, notamment à section rectangulaire avec ou sans queue d'aronde, et à fer plat.

Le bornier peut être doté d'une isolation totale par adjonction d'une paire de plaques d'obturation sur les faces latérales extérieures des piliers, et d'une paire de capots disposés parallèlement le long de la direction longitudinale de part et d'autre des barrettes conductrices, lesdits plaques et capots étant réalisés en matériau isolant moulé.

D'autres avantages et caractéristiques ressortiront plus clairement de la description qui va suivre d'un mode de réalisation de l'invention, donné à titre d'exemple non limitatif, et représenté aux dessins annexés, dans lesquels:
La figure 1 est une vue éclatée en perspective du bornier terre/neutre selon l'invention;
La figure 2 montre une vue arrière en perspective d'une partie du bornier de la figure 1;
La figure 3 représente une vue en élévation du bornier assemblé;
La figure 4 est une vue en plan de la figure 3;
Les figures 5 et 6 sont des vues en coupes selon la ligne 5-5 de la figure 3, respectivement en cours d'introduction et en fin de course de la barrette dans la glissière.

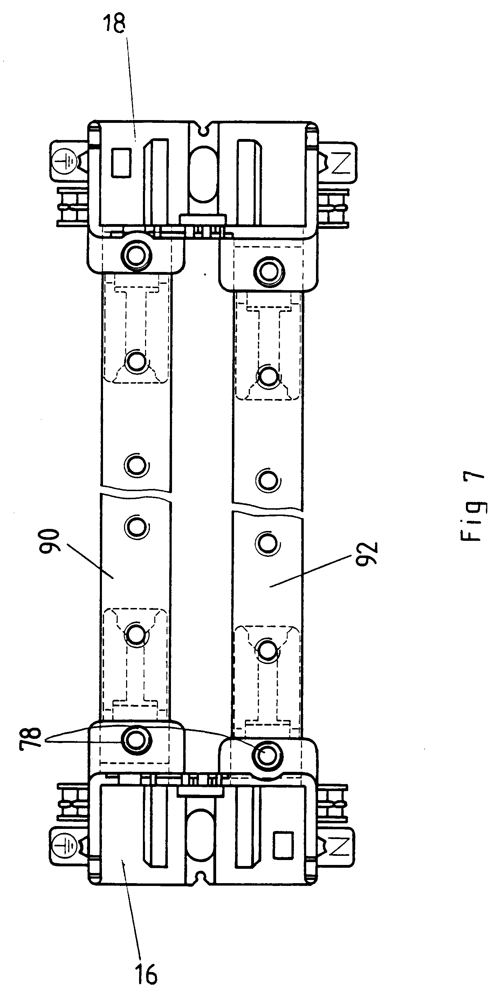

La figure 7 est une vue identique à la figure 4, avec des fers plats à la place des barrettes.

Sur les figures, un bornier 10 terre/neutre, utilisable dans un coffret de distribution électrique, comporte deux barrettes 12,14 conductrices ayant des structures identiques, et s'étendant parallèlement l'une à l'autre, en étant positionnées sur un support isolant ayant deux piliers 16,18 d'extrémités en matériau isolant. Chaque barrette 12,14 de raccordement est dotée d'une série de trous 20 circulaires, échelonnés le long de la barrette, en débouchant transversalement des faces latérales opposées pour recevoir les extrémités des fils à raccorder.

A chaque trou 20 est associée une vis 22 de serrage logée dans un orifice 24 taraudé sur la face supérieure de la barrette, et destinée à assurer une bonne connexion du fil ou conducteur. La vis 22 s'étend perpendiculairement à l'axe du trou 20 correspondant, et comporte une tête fendue susceptible d'être actionnée par un tournevis.

La base en queue d'aronde 26 de chaque barrette 12,14 est pourvue de deux rainures 28,30 longitudinales, ménagées le long des faces latérales opposées, entre les trous 20 et la face inférieure.

Chaque pilier 16,18 en matériau isolant moulé est équipé d'une paire de bras 32,34; 36,38 de positionnement des barrettes 12,14 et une embase 40 de fixation destinée à être montée sur une entretoise 42 isolante, constituant l'interface entre le bornier 10 et le châssis (non représenté) du coffret.

Le rebord horizontal de chaque bras 32,34; 36,38 est conformé en glissière 44 coopérant avec l'extrémité de la base en queue d'aronde 26 des barrettes 12,14 conductrices.

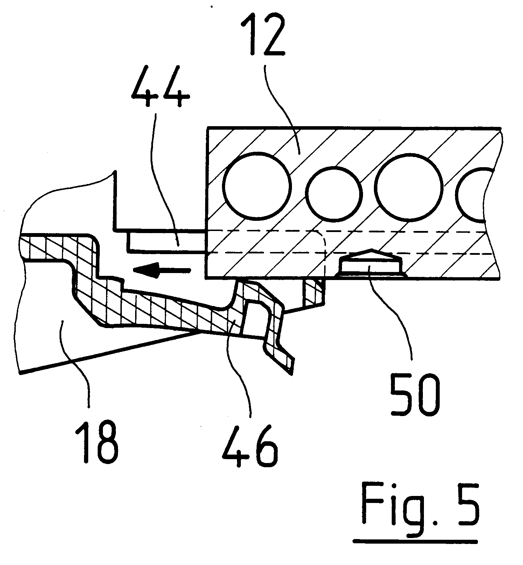

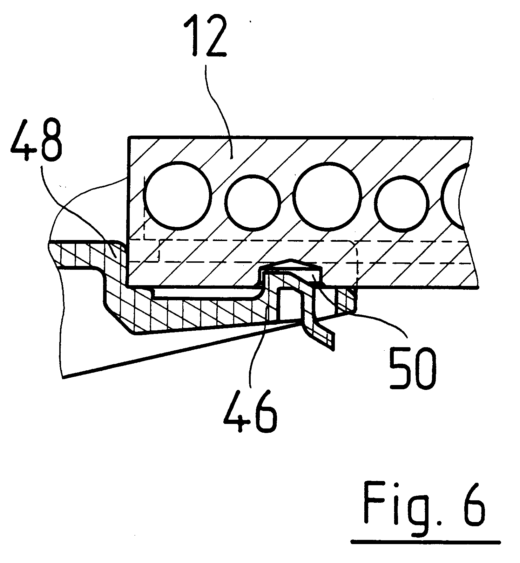

Dans la glissière 44 de chaque bras 32,34; 36,38 de positionnement se trouve un crochet 46 de retenue en forme de languette élastique susceptible de s'effacer par déformation vers une position inactive lors de l'introduction par coulissement de la barrette 12,14 correspondante dans la glissière 44 (figure 5), et de revenir vers une position active de verrouillage lorsque l'extrémité de ladite barrette vient en engagement contre une butée 48 (figure 6). Dans cette dernière position, le blocage de la barrette 12,14 s'effectue par introduction du crochet 46 dans une cavité 50 prévue dans la face inférieure aux deux extrémités de chaque barrette 12,14.

Le déplacement du crochet 46 de la position inactive vers la position active intervient automatiquement par effet élastique en fin de montage de la barrette 12,14. Le retrait d'une barrette 12,14 peut être réalisé après l'actionnement forcé des deux crochets 46 vers la position inactive, par exemple à la main ou avec l'usage d'un outil.

L'agencement des quatre bras 32,34; 36,38 sur les piliers 16,18 respectifs permet d'obtenir un double décalage longitudinal et transversal entre les deux barrettes 12,14.

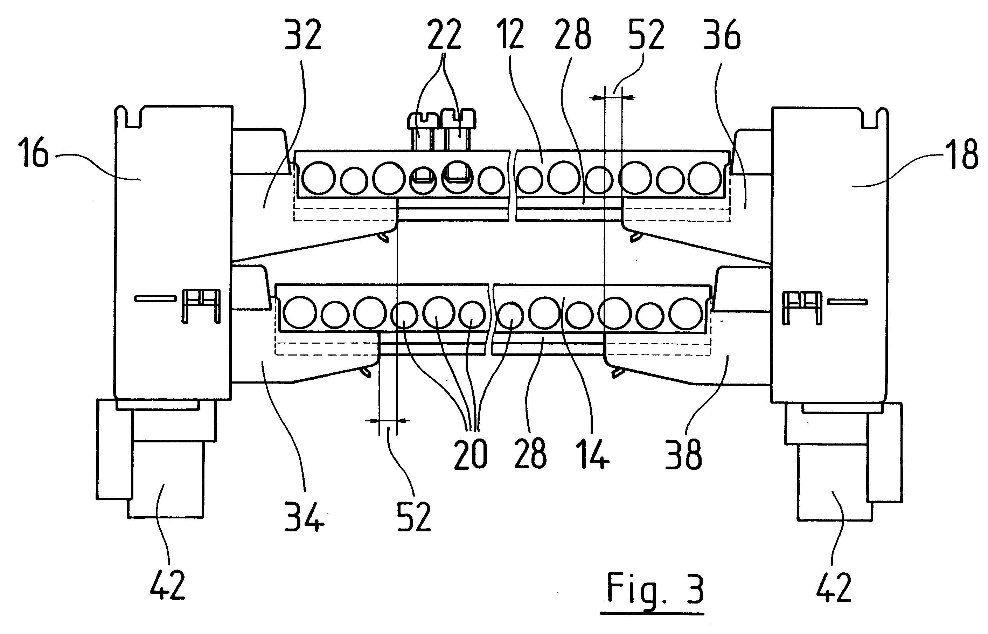

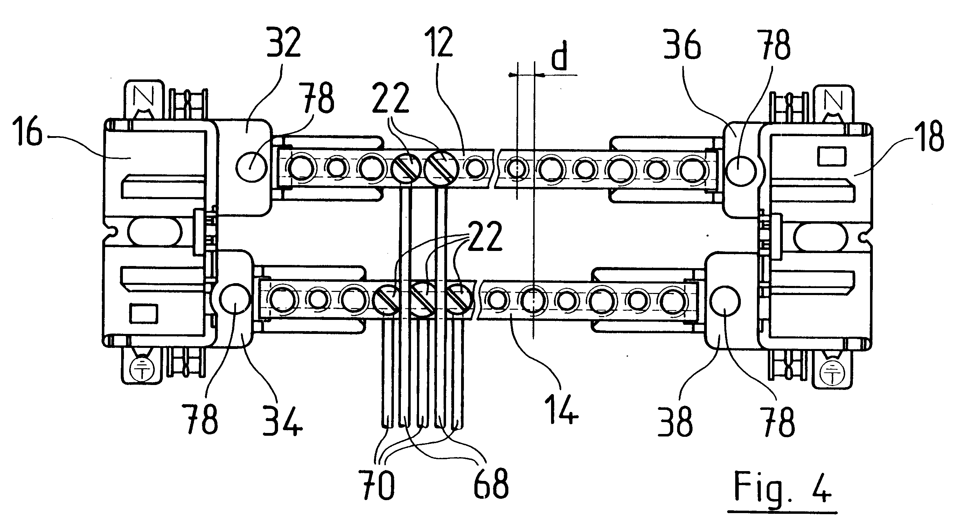

Sur le pilier 16, le bras inférieur 34 se trouve en retrait du bras supérieur 32, alors que la disposition inverse est réalisée sur le pilier 18, dans lequel le bras supérieur 36 est en retrait du bras inférieur 38. La distance 52 (figure 3) séparant les entrées des glissières 44 respectives des bras 32,34; 36,38 d'un même pilier 16,18 assure le décalage longitudinal d, correspondant (sur la figure 4) à un demi-pas entre les axes de vis 22 des deux barrettes 12,14.

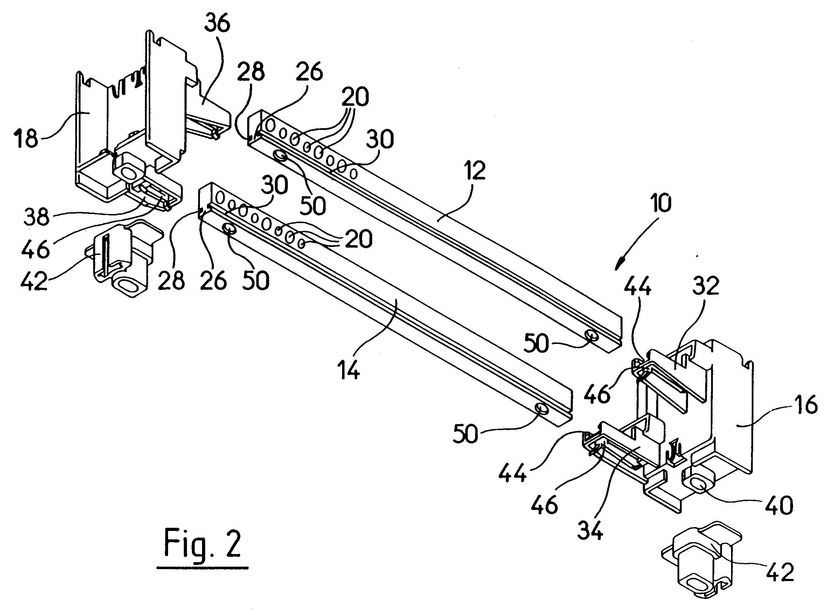

Le décalage transversal des barrettes 12,14 parallèles est obtenu par la solidarisation des bras 32,34; 36,38 à l'emplacement de deux sommets opposés de la face d'appui rectangulaire et verticale de chaque pilier 16,18 (voir figure 2).

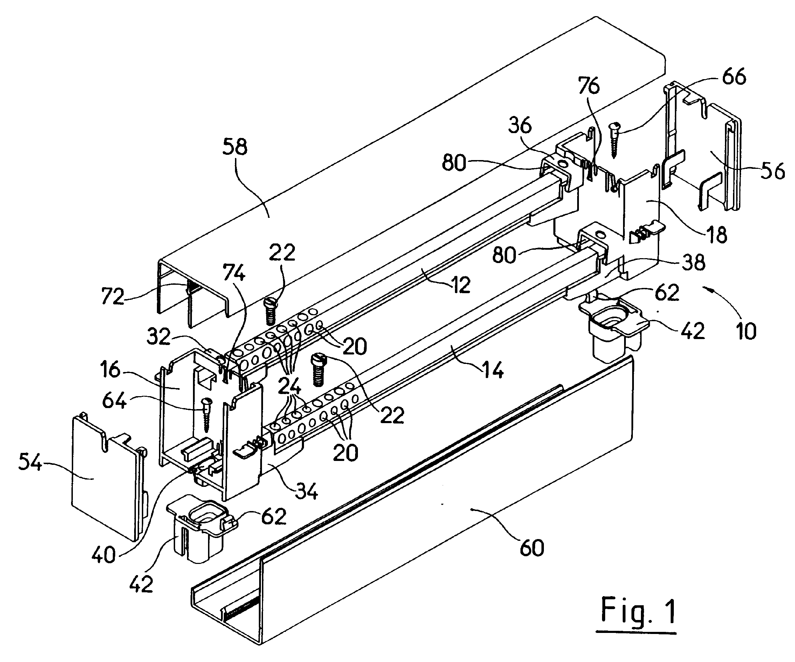

Le bornier 10 est doté d'une isolation totale grâce à l'adjonction d'une paire de plaques 54,56 d'obturation sur les faces latérales extérieures des piliers 16,18, et d'une paire de capots 58,60 complémentaires, disposés parallèlement de part et d'autre des barrettes 12,14 conductrices (figure 1). Les plaques 54,56 et les capots 58,60 sont en matériau isolant moulé.

Chaque entretoise 42 comporte au moins un ergot 62 d'agrippage, destiné à s'engager dans une ouverture (non représentée) ménagée dans l'embase 40 de fixation, de manière à assurer un prémontage par encliquetage du pilier 16,18 sur l'entretoise 42 correspondante. La fixation définitive du bornier 10 sur le châssis intervient ensuite au moyen d'une paire de vis 64,66 (figure 1) traversant des orifices alignés de chaque ensemble embase 40 et entretoise 42.

Le montage et la mise en oeuvre du bornier 10 terre/neutre dans le coffret s'effectuent de la manière suivante:

En fonction du nombre de conducteurs de neutre 68 et de conducteurs de terre 70 à raccorder, l'installateur choisit la longueur des barrettes 12,14 conductrices, laquelle correspond à un nombre prédéterminé de trous 20. La base en queue d'aronde 26 de chaque barrette 12,14 est insérée dans la glissière 44 correspondante des deux piliers 16,18, et est bloquée à chaque extrémité par l'introduction du crochet 46 de retenue dans la cavité 50. Les deux entretoises 42 sont encliquetées par leurs ergots 62 d'agrippage respectifs, dans les embases 40 de fixation des piliers 16,18. Le bornier 10 ainsi constitué, est monté sur le châssis du coffret au moyen des vis de fixation 64,66, tel que les vis 22 des barrettes 12,14 se trouvent en regard de la face avant du coffret (voir figure 4).

L'installateur peut alors procéder au raccordement électrique du bornier 10, en introduisant les conducteurs de neutre 68 dans les trous 20 de la barrette 12, et les conducteurs de terre 70 dans l'autre barrette 14.

Le double décalage longitudinal et transversal des barrettes 12,14 conductrices facilite le travail de câblage de l'installateur. Le décalage transversal permet de disposer les conducteurs selon deux nappes parallèles verticales, décalées l'une de l'autre dans le sens de la profondeur du coffret. La première nappe des conducteurs de neutre 68 associée à la barrette 12 passe devant la deuxième nappe raccordée à la barrette 14 de terre. Etant donné la présence du décalage longitudinal d correspondant à un demi-pas entre les axes des vis 22 des deux barrettes 12,14, on remarque sur la figure 4, que les conducteurs de neutre 68 s'étendent dans des plans parallèles passant entre les vis 22 successives de la barrette 14 de terre. L'accès aux têtes de vis 22 de la barrette 14 est laissé libre pour assurer le serrage des conducteurs de terre 70.

Lorsque le câblage du bornier 10 est terminé, il est possible d'installer les plaques 54,56 d'obturation et les capots 58,60 sur les deux supports 16,18 pour obtenir l'isolation totale du bornier 10. Les capots 58,60 peuvent être réalisés en un matériau isolant transparent, et comporte chacun une nervure 72 longitudinale à stries, dont les extrémités s'engagent dans des fentes 74,76 conjuguées des piliers 16,18.

Les deux piliers 16,18 isolants du bornier 10 acceptent également d'autres types de barrettes conductrices, par exemple à section rectangulaire 9 X 6,5mm sans queue d'aronde. La fixation des extrémités de ces barrettes n'intervient pas par les crochets 46 de retenue, mais au moyen de vis introduites dans des trous 78 prévus sur les bras 32,34; 36,38 de positionnement des barrettes 12,14.

Comme barrettes de raccordement 12,14, on peut également prévoir des fers plats 90,92 pouvant être équipés de cavaliers de serrage. Le montage est possible grâce à la présence d'ouvertures 80 de formes rectangulaires conjuguées (figure 1) dans les bras 32,34; 36,38.

## Revendications

1. Bornier utilisable dans un coffret électrique pour la distribution du neutre et de la terre, comprenant au moins deux barrettes (12,14) conductrices de raccordement, ayant des structures identiques et agencées sur un support isolant, chaque barrette (12,14) comportant une série de trous (20) échelonnés le long de la direction longitudinale en débouchant des faces latérales opposées pour recevoir les extrémités des conducteurs (68,70) à raccorder, à chaque trou (20) étant associée une vis (22) de serrage, logée dans un orifice (24) circulaire taraudé accessible depuis la face supérieure pour assurer une bonne connexion desdits conducteurs, l'entraxe entre les orifices (24) successifs correspondant au pas des trous (20),
caractérisé en ce que le support isolant est doté de deux piliers (16,18) d'extrémités entre lesquels s'étendent parallèlement les barrettes (12,14) avec formation d'un premier décalage transversal, chaque pilier (16,18) comportant une paire de bras (32,34; 36,38) de positionnement ayant chacun un rebord horizontal conformé en glissière (44) autorisant le coulissement de l'extrémité de la barrette (12,14) jusqu'à une butée (48) de limitation, et que l'un des bras (34,36) de chaque pilier (16,18) se trouve en retrait de l'autre bras (32,38) pour engendrer un deuxième décalage longitudinal (d) correspondant à un demi-pas entre les vis (22) des deux barrettes (12,14).

2. Bornier selon la revendication 1, caractérisé en ce que chaque glissière (44) est équipée d'un crochet (46) de retenue, en forme de languette élastique susceptible de s'effacer par déformation vers une position inactive lors de l'introduction de l'extrémité de la barrette (12,14) correspondante dans la glissière (44), et de revenir vers une position active de verrouillage lorsque ladite extrémité vient en engagement contre la butée (48).

3. Bornier selon la revendication 2, caractérisé en ce que la base en queue d'aronde (26) de chaque barrette (12,14) conductrice comporte une cavité (50) à chaque extrémité, et que le blocage de la barrette (12,14) intervient par introduction du crochet (46) de retenue dans ladite cavité (50).

4. Bornier selon la revendication 1, 2 ou 3, caractérisé en ce que chaque pilier (16,18) du support isolant comporte une embase (40) de fixation adaptable à une entretoise (42) isolante constituant l'interface entre le bornier (10) et le châssis, ladite entretoise (42) ayant un ergot (62) d'agrippage assurant un prémontage par encliquetage dudit pilier (16,18) sur l'entretoise (42), avant la fixation définitive sur le châssis.

5. Bornier selon la revendication 4, caractérisé en ce que le bornier (10) est doté d'une isolation totale par adjonction d'une paire de plaques (54,56) d'obturation sur les faces latérales extérieures des piliers (16,18), et d'une paire de capots (58,60) disposés parallèlement le long de la direction longitudinale de part et d'autre des barrettes (12,14) conductrices, lesdits plaques et capots étant réalisés en matériau isolant moulé.

6. Bornier selon la revendication 5, caractérisé en ce que chaque capot (58,60) est pourvu d'une nervure (72) longitudinale à stries destinée à s'engager dans des fentes (74,76) de formes conjuguées ménagées dans les piliers (16,18).

## Patentansprüche

1. Klemmleiste zur Verteilung des Neutralleiters und des Erdungsleiters in einem elektrischen Installationsverteiler mit mindestens zwei identisch aufgebauten Leiterschienen (12, 14), die auf einem Isolierstoffträger montiert sind und jeweils eine Reihe von in Längsrichtung nebeneinander angeordneten und die sich gegenüberliegenden Seitenflächen durchragende Öffnungen (20) zur Aufnahme der Enden der Anschlußleiter (68, 70) aufweisen, wobei jeder Öffnung (20) eine Klemmschraube (22) zugeordnet ist, die in eine von der Oberseite zugängliche kreisrunde Gewindebohrung (24) eingesetzt ist, um eine gute Verbindung der genannten Leiter zu gewährleisten, und der Abstand zwischen den aufeinanderfolgenden Gewindebohrungen (24) dem Teilungsabstand der Öffnungen (20) entspricht,
dadurch gekennzeichnet, daß der Isolierstoffträger zwei Endstützen (16, 18) umfaßt, zwischen denen die Leiterschienen (12, 14) unter Einhaltung eines ersten, in Querrichtung ausgebildeten Versatzabstands parallel angeordnet sind, wobei jede Endstütze (16, 18) zwei Positionierarme (32, 34; 36, 38) mit jeweils einem als Gleitschiene (44) ausgebildeten waagerechten Ausleger umfaßt, in den das Ende der Leiterschiene (12, 14) bis zu einem Grenzanschlag (48) eingeschoben werden kann, und daß einer der Positionierarme (34, 36) jeder Endstütze (16, 18) gegenüber dem jeweils anderen Positionierarm (32, 38) seitlich versetzt ist, um einen zweiten, in Längsrichtung ausgebildeten Versatzabstand (d) entsprechend dem halben Teilungsabstand zwischen den Klemmschrauben (22) der beiden Leiterschienen (12, 14) zu bilden.

2. Klemmleiste nach Anspruch 1, dadurch gekennzeichnet, daß jede Gleitschiene (44) mit einem Feststellhaken (46) in Form einer Federzunge versehen ist, die beim Aufschieben des Endes der zugehörigen Leiterschiene (12, 14) auf die Gleitschiene (44) durch Verformung in eine inaktive Stellung zurückgezogen werden und erneut in eine aktive Verriegelungsstellung zurückkehren kann, wenn das genannte Leiterschienenende gegen den Anschlag (48) gelangt.

3. Klemmleiste nach Anspruch 2, dadurch gekennzeichnet, daß der schwalbenschwanzförmige Fuß (26) jeder Leiterschiene (12, 14) an jedem Ende eine Vertiefung (50) aufweist und daß die Blockierung der Leiterschiene (12, 14) durch Eingreifen des Feststellhakens (46) in die genannte Vertiefung (50) erfolgt.

4. Klemmleiste nach Anspruch 1, 2 oder 3, dadurch gekennzeichnet, daß jede Endstütze (16, 18) des Isolierstoffträgers einen Befestigungsboden (40) aufweist, der mit einem den Übergang zwischen der Klemmleiste (10) und dem Trägergestell darstellenden Isolierstoff-Abständshalter (42) verbunden werden kann, wobei der genannte Abstandshalter (42) einen Rasthaken (62) aufweist, der durch Aufschnappen eine Vormontage der genannten Endstütze (16, 18) auf dem Abstandshalter (42) gewährleistet, bevor die endgültige Befestigung auf dem Trägergestell erfolgt.

5. Klemmleiste nach Anspruch 4, dadurch gekennzeichnet, daß die Klemmleiste (10) durch das Anbringen von zwei Abschlußplatten (54, 56) an den äußeren Seitenflächen der Endstützen (16, 18) sowie von zwei in Längsrichtung zu beiden Seiten der Leiterschienen (12, 14) parallel zueinander angeordneten Abdeckleisten (58, 60) vollständig isoliert ist, wobei die genannten Abschlußplatten und Abdeckleisten aus Isolierstoff bestehen.

6. Klemmleiste nach Anspruch 5, dadurch gekennzeichnet, daß jede Abdeckleiste (58, 60) einen in Längsrichtung verlaufenden gerillten Steg (72) aufweist, der dazu dient, in in den Endstützen (16, 18) ausgebildete Schlitze (74, 76) mit entsprechender Form einzugreifen.

## Claims

1. A terminal block able to be used in an electrical cabinet for distribution of the neutral and earth, comprising at least two conducting connection strips (12, 14), having identical structures and arranged on an insulating support, each strip (12, 14) comprising a series of holes (20) staggered along the longitudinal direction and opening out from the opposite side faces to receive the ends of the conductors (68, 70) to be connected, each hole (20) having an associated tightening screw (22) housed in a tapped circular orifice (24) accessible from the top face to ensure a good connection of said conductors, the distance between the successive orifices (24) corresponding to the pitch of the holes (20),
characterized in that the insulating support is provided with two end props (16, 18) between which the strips (12, 14) extend parallel with formation of a first transverse offset, each prop (16, 18) comprising a pair of positioning arms (32, 34; 36, 38) each having a horizontal edge shaped as a slide (44) enabling the end of the strip (12, 14) to slide up to a limiting stop (48), and that one of the arms (34, 36) of each prop (16, 18) is located laid back with respect to the other arm (32, 38) to generate a second longitudinal offset (d) corresponding to a half-pitch between the screws (22) of the two strips (12, 14).

2. The terminal block according to claim 1, characterized in that each slide (44) is equipped with a retaining catch (46), in the form of a flexible tab designed to withdraw by deformation to an inactive position when the end of the corresponding strip (12, 14) is inserted in the slide (44), and to return to an active locking position when said end comes into engagement against the stop (48).

3. The terminal block according to claim 2, characterized in that the dovetailed base (26) of each conducting strip (12, 14) comprises a cavity (50) at each end, and that blocking of the strip (12, 14) is achieved by insertion of the retaining catch (46) in said cavity (50).

4. The terminal block according to claim 1, 2 or 3, characterized in that each insulating support prop (16, 18) comprises a fixing base (40) designed to be mounted on an insulating spacer (42) forming the interface between the terminal block (10) and the frame, said spacer (42) having a gripping spline (62) providing pre-assembly by clipping of said prop (16, 18) onto the spacer (42), before final fixing onto the frame.

5. The terminal block according to claim 4, characterized in that the terminal block (10) is provided with total insulation by addition of a pair of blanking plates (54, 56) on the external side faces of the props (16, 18), and of a pair of covers (58, 60) disposed parallel along the longitudinal direction on each side of the conducting strips (12, 14), said plates and covers being made of moulded insulating material.

6. The terminal block according to claim 5, characterized in that each cover (58, 60) is provided with a striated longitudinal rib (72) designed to engage in slots (74, 76) of conjugate shapes arranged in the props (16, 18).
